# EUROPEAN PATENT APPLICATION

(11) **EP 3 681 053 A1**
(43) Date of publication of application: **15.07.2020**
(21) Application number: 17924639.2
(22) Date of filing: 08.09.2017
(51) Int. Cl.: H04B 7/06, H04B 7/0417

(54) **USER TERMINAL AND WIRELESS COMMUNICATION METHOD**

(71) Applicant: NTT DOCOMO, INC., Chiyoda-ku Tokyo 100-6150 (JP)
(72) Inventor: HARADA, Hiroki, Tokyo 1006150 (JP); NAGATA, Satoshi, Tokyo 1006150 (JP); WANG, Jing, Beijing 100190 (CN); LIU, Min, Beijing 100190 (CN)
(74) Representative: Hoffmann Eitle
(86) International application number: PCT/JP2017/032586
(87) International publication number: WO 2019/049347

(57) **Abstract**

A user terminal according to one aspect of the present invention includes: a receiving section that receives information related to whether or not it is possible to perform control of Radio Link Monitoring (RLM) based on a Beam Recovery (BR) result; and a control section that determines whether or not to perform the control of the RLM based on the BR result, based on the information related to whether or not it is possible to perform the control of the RLM. According to one aspect of the present disclosure, it is possible to prevent a communication throughput from lowering even when RLM control based on BR is performed.

## Description

### Technical Field

The present invention relates to a user terminal and a radio communication method of a next-generation mobile communication system.

### Background Art

In Universal Mobile Telecommunications System (UMTS) networks, for the purpose of higher data rates and lower latency, Long Term Evolution (LTE) has been specified (Non-Patent Literature 1). Furthermore, for the purpose of a larger capacity and higher sophistication than those of LTE (also referred to as LTE Rel. 8 or 9), LTE-Advanced (LTE-A or LTE Rel. 10, 11, 12 and 13) has been specified.

LTE successor systems (also referred to as, for example, Future Radio Access (FRA), the 5th generation mobile communication system (5G), 5G+ (plus), New Radio (NR), New radio access (NX), Future generation radio access (FX) or LTE Rel. 14, 15 or subsequent releases) have been also studied.

Legacy LTE systems (e.g., LTE Rel. 8 to 13) perform communication on Downlink (DL) and/or Uplink (UL) by using a subframe (also referred to as a TTI: Transmission Time Interval) of 1 ms. This subframe is a transmission time unit of 1 channel-coded data packet, and is a processing unit of scheduling, link adaptation or retransmission control (HARQ: Hybrid Automatic Repeat reQuest).

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)", April 2010

### Summary of Invention

### Technical Problem

A Radio Link Monitoring (RLM) method for detecting a Radio Link Failure (RLF) has been argued for a future radio communication system (e.g., NR).

Furthermore, it has been studied for NR to perform communication by using Beam Forming (BF). Furthermore, it has been studied to perform a procedure of switching (that may be referred to as Beam Recovery (BR)) to other beams to prevent occurrence of an RLF when quality of a specific beam deteriorates.

Furthermore, it has been studied to control RLM by using a BR result. However, there is a risk that, when the BR result is not appropriately used, a situation that the RLF is detected unreasonably too late or too early occurs, and a communication throughput lowers.

It is therefore one of objects of the present disclosure to provide a user terminal and a radio communication method that can prevent a communication throughput from lowering even when RLM control based on BR is performed.

### Solution to Problem

A user terminal according to one aspect of the present disclosure includes: a receiving section that receives information related to whether or not it is possible to perform control of Radio Link Monitoring (RLM) based on a Beam Recovery (BR) result; and a control section that determines whether or not to perform the control of the RLM based on the BR result, based on the information related to whether or not it is possible to perform the control of the RLM.

### Advantageous Effects of Invention

According to one aspect of the present disclosure, it is possible to prevent a communication throughput from lowering even when RLM control based on BR is performed.

### Brief Description of Drawings

Fig. 1 is a schematic diagram of decision on an RLF based on P-IS/OSS.
Fig. 2 is a diagram illustrating one example of a BR procedure.
Figs. 3A and 3B are diagrams illustrating one example of RLM control based on an embodiment 3.2.
Fig. 4 is a diagram illustrating one example of a schematic configuration of a radio communication system according to one embodiment.
Fig. 5 is a diagram illustrating one example of an overall configuration of a radio base station according to the one embodiment.
Fig. 6 is a diagram illustrating one example of a function configuration of the radio base station according to the one embodiment.
Fig. 7 is a diagram illustrating one example of an overall configuration of a user terminal according to the one embodiment.
Fig. 8 is a diagram illustrating one example of a function configuration of the user terminal according to the one embodiment.
Fig. 9 is a diagram illustrating one example of hardware configurations of the radio base station and the user terminal according to the one embodiment.

### Description of Embodiments

It has been studied for a future radio communication system (e.g., at least one of NR, 5G and 5G+ that will be also referred to simply as NR) to perform communication by using Beam Forming (BF).

For example, a UE and/or a base station (e.g., gNode B (gNB)) may use a beam (also referred to as a transmission beam or a Tx beam) used for transmission of signals, and a beam (also referred to as a reception beam or an Rx beam) used for reception of signals. A combination of the transmission beam on a transmission side and the reception beam on a reception side may be referred to as a Beam Pair Link (BPL).

When BF is used, radio quality is likely to be influenced by a disturbance due to an obstacle, and therefore is assumed to deteriorate. There is a risk that the deterioration of the radio quality frequently causes a Radio Link Failure (RLF). When the RLF occurs, reconnection with a cell needs to be made, and therefore the frequent occurrence of the RLF deteriorates a system throughput.

Hence, a Radio Link Monitoring (RLM) method has been argued for NR. For example, it has been studied for NR to support one or a plurality of RLM Reference Signal (RLM-RS) resources.

The RLM-RS resources may be associated with resources and/or ports for a Synchronization Signal Block (SSB) or a channel state measurement RS (CSI-RS: Channel State Information RS). In addition, the SSB may be referred to as an SS/Physical Broadcast Channel (PBCH) block.

The RLM-RS may be at least one of a Primary Synchronization Signal (PSS: Primary SS), a Secondary Synchronization Signal (SSS: Secondary SS), a Mobility Reference Signal (MRS: Mobility RS), a CSI-RS, a DeModulation Reference Signal (DMRS) and a beam-specific signal, or a signal that is configured by expanding and/or changing these signals (e.g., a signal that is configured by changing a density and/or a periodicity).

The UE may be configured by a higher layer signaling to perform measurement using the RLM-RS resources. The UE configured to perform measurement may be assumed to determine whether a radio link is in an In-Sync (IS) state or an Out-Of-Sync (OOS) state based on a measurement result of the RLM-RS resources. When the base station does not configure the RLM-RS resources, the UE may define default RLM-RS resources for performing RLM by a specification.

In addition, the higher layer signaling may be, for example, a Radio Resource Control (RRC) signaling, a Medium Access Control (MAC) signaling (e.g., an MAC Control Element (MAC CE) or an MAC Protocol Data Unit (PDU)), and broadcast information (a Master Information Block (MIB) or a System Information Block (SIB)).

When radio quality estimated (that may be referred to as measured) based on at least a given number of resources among all configured RLM-RS resources exceeds a first threshold (that may be referred to as Qin), the UE may determine that the radio link is IS.

When the radio quality estimated based on all configured RLM-RS resources is less than a second threshold (that may be referred to as Qₒᵤₜ), the UE may determine that the radio link is OOS. In addition, this radio quality may be, for example, radio quality associated with a Block Error Rate (BLER) of a hypothetical PDCCH.

In addition, information related to Qᵢₙ, Qₒᵤₜ and the above given number may be indicated by a higher layer signaling or a physical layer signaling (e.g., Downlink Control Information (DCI)), or may be defined by the specification.

IS/OOS that is determined per fixed duration (periodically) may be referred to as Periodic IS (P-IS)/Periodic OOS (P-OOS). For example, IS/OOS that is determined by using an RLM-RS may be P-IS/OOS.

IS/OOS is indicated from a physical layer to a higher layer (e.g., an MAC layer or an RRC layer) in the UE, and an RLF may be determined based on the IS/OOS indication.

When receiving the OOS indication related to a given cell (e.g., primary cell) N310 times, the UE activates (starts) a timer T310. When receiving the IS indication related to the given cell N311 times while the timer T310 is activating, the UE stops the timer T310. When the timer T310 expires, the UE determines that the RLF has been detected in relation to the given cell.

In addition, this RLF decision method is the same as those of legacy LTE, yet is not limited to this. Names such as N310, N311 and T310 are not limited to these. T310 may be referred to as a timer for RLF detection. N310 may be referred to as the number of times of an OOS indication for activating the timer T310. N311 may be referred to as the number of times of an IS indication for stopping the timer T310.

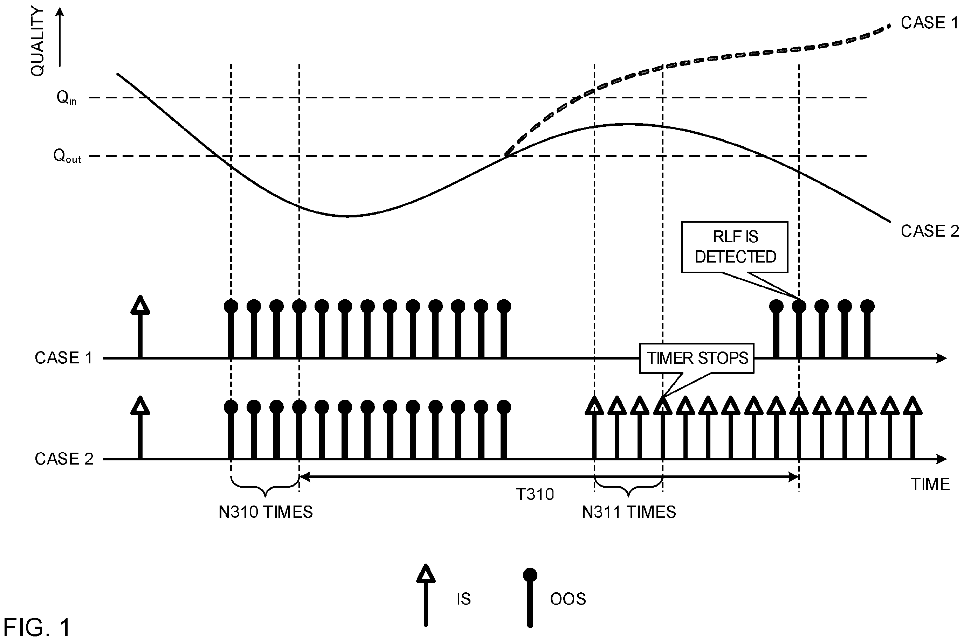

Fig. 1 is a schematic diagram of decision on an RLF based on P-IS/OOS. Fig. 1 assumes N310 = N311 = 4. T310 represents a duration from activation to expiration of the timer T310, and does not indicate a counter of the timer.

An upper part in Fig. 1 illustrates two cases (a case 1 and a case 2) of a change in estimated radio quality. A lower part in Fig. 1 illustrates P-IS/OOS indications associated with the above two cases.

In the case 1, when OOS first occurs N310 times, the timer T310 activates. Even after the activation, the radio quality does not exceed Qin, and, when T310 expires, an RLF is detected.

In the case 2, although the timer T310 activates similar to the case 1, the radio quality subsequently exceeds Qin, and when IS occurs N311 times, T310 stops.

By the way, it has been studied for NR to perform a procedure of switching (that may be referred to as Beam Recovery (BR) or L1/L2 beam recovery) to other beams to prevent occurrence of an RLF when quality of a specific beam deteriorates.

The BR procedure may be triggered on an occasion of a beam failure. In this regard, the beam failure may indicate that, for example, one, a plurality or all of control channels are not detected for a given duration by the UE and/or the base station, or may indicate that a measurement result of received quality of a reference signal associated with the control channel does not satisfy given quality.

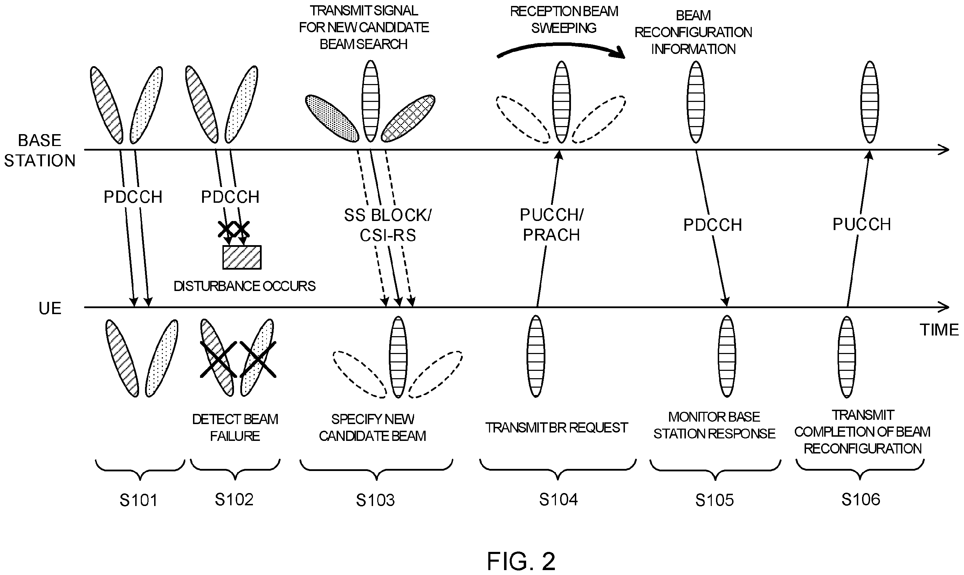

Fig. 2 is a diagram illustrating one example of the BR procedure. The number of beams is one example, and is not limited to this. In an initial state (step S101) in Fig. 2, the UE receives a downlink control channel (PDCCH: Physical Downlink Control Channel) transmitted by the base station by using two beams.

In step S102, a radio wave from the base station is disturbed, and therefore the UE cannot detect the PDCCH. This disturbance occurs due to, for example, an influence of an obstacle between the UE and the base station, a fading or an interference.

As a result of this, the UE detects the beam failure. The base station may determine that the UE has detected the beam failure, based on a fact that there is no indication from the UE, or may determine that the beam failure has been detected when receiving a given signal (a BR request in step S104) from the UE.

In step S103, the UE starts searching new candidate beams used for new communication for BR. For example, the base station periodically or aperiodically transmits a given signal (e.g., an SSB or a CSI-RS) by using one or more beams. After detecting the beam failure, the UE performs measurement based on the given signal, and specifies one or more desirable (e.g., quality) new candidate beams. In a case of this example, one beam is specified as the new candidate beam.

The measurement may be, for example, measurement related to received power (RSRP: Reference Signal Received Power) or received quality (RSRQ: Reference Signal Received Quality).

In step S104, the UE that has specified the new candidate beam transmits the BR request (beam recovery request signal). The BR request may be transmitted by using at least one of, for example, an uplink control channel (PUCCH: Physical Uplink Control Channel), a random access channel (PRACH: Physical Random Access Channel), and a UL grant-free PUSCH (Physical Uplink Shared Channel).

The BR request may include information of the new candidate beam specified in step S103. A resource for the BR request may be associated with the new candidate beam. The information of the beam may be indicated by using a Beam Index (BI), a port of a given reference signal, and/or a resource index (e.g., a CSI-RS Resource Indicator (CRI)).

In step S105, the base station that has detected the BR request transmits a response signal to the BR request from the UE. The response signal may include reconfiguration information (e.g., CSI-RS resource configuration information) of one or a plurality of beams. The response signal may be transmitted in, for example, a UE-common search space of the PDCCH.

The UE may determine a transmission beam and/or a reception beam to use based on the beam reconfiguration information.

In step S106, the UE may transmit to the base station a message indicating that a beam reconfiguration has been completed. The message may be transmitted on, for example, a PUCCH.

A BR success refers to, for example, a case where the BR procedure reaches step S106. On the other hand, a BR failure refers to, for example, a case where even one candidate beam has not been able to be specified in step S103.

The UE is assumed to be configured to perform both of RLM of a beam and BR of a beam in, for example, a scenario where multiple beams are operated. In this regard, it has been studied to determine above-described IS/OOS in association with the BR failure and/or the BR success.

For example, occurrence of the BR failure may be determined as OOS. OOS associated with the BR failure may be referred to as Aperiodic OOS (A-OOS). Occurrence of the BR success may be determined as IS. The IS associated with the BR success may be referred to as Aperiodic IS (A-IS).

A-OOS (IS) may be determined based on a result obtained by measuring a given signal before and/or after the BR failure (success). The given signal may be the same as an RLM-RS used for decision on P-OOS/IS, or may be a different signal (e.g., an SSB or a CSI-RS). Information (e.g., resource) related to the given signal may be indicated by a higher layer signaling (e.g., RRC signaling) or a physical layer signaling (e.g., DCI), or may be defined by the specification.

Furthermore, it has been studied to control the above-described timer T310 based on A-OOS and/or A-IS, and determine an RLF. However, the inventors of this application have found a problem that, when uniform control is performed based on A-OOS and/or A-IS, the RLF is detected unreasonably too late or too early. This problem causes a communication throughput to lower.

This task will be described below. For example, there is considered a case where beams (RS resources) used to specify the new candidate beam in step S103 in Fig. 2 are all beams that can be used to transmit a PDCCH. In this case, a BR failure means that there is no beam (that may be referred to as a beam that can indicate the PDCCH or a PDCCH beam) that can be used for the UE. In this case, an RLF may be detected according to an indication of A-OOS based on the BR failure.

On the other hand, taking a UE processing load and delay of the BR procedure into account, the base station cannot necessarily use all available beams for transmission of the PDCCH. Taking this case into account, meanings of the BR success and the BR failure are not fixed (can vary).

For example, there is considered a case where beams (RS resources) used to specify the new candidate beam in step S103 in Fig. 2 are part (subset) of all beams that can be used to transmit the PDCCH. In this case, the BR success means that there is at least one PDCCH beam for the UE. In this case, it is supposed that the timer T310 may be stopped according to an indication of A-IS based on the BR success.

However, there might be a case where the UE immediately loses track of at least this one PDCCH beam again. When, for example, only one very narrow beam is specified in step S103, this case occurs. Hence, it is also supposed that the timer T310 should not be stopped according to an indication of A-IS based on the BR success.

Furthermore, it is also considered that the BR failure does not mean that there is not a PDCCH beam for the UE. This is because, even in the case of the BR failure, there is likely to be the PDCCH beam that is not covered by new candidate beam search in the BR procedure. Hence, it is also supposed that an RLF should not be detected according to an indication of A-OOS based on the BR failure.

Hence, the inventors of this application have conceived appropriately defining a UE operation related to RLM/an RLF while realizing flexibility of the BR configuration.

Embodiments according to the present disclosure will be described in detail below with reference to the drawings. A radio communication method according to each embodiment may be each applied alone, or may be applied in combination.

In addition, the following description assumes that "A-IS" simply described means "A-IS based on a BR success", and "A-OOS" simply described means "A-OOS based on a BR failure", yet is not limited to this. For example, A-IS/OOS may be read as A-IS/OOS based on a given processing result associated with BR.

### (Radio Communication Method)

### <First Embodiment>

According to the first embodiment, whether or not to control RLM based on a BR procedure result (whether or not it is possible to perform control of RLM based on a BR result) may be configured to a UE. Whether or not to apply A-IS to RLM may be configured to the UE. Whether or not to apply A-OOS to RLM may be configured to the UE. Furthermore, whether or not A-IS and/or A-OOS may be determined based on the BR procedure result may be configured to the UE.

Information related to these configurations (e.g., information related to whether or not it is possible to perform control of RLM based on the BR result) may be indicated from a radio base station to the UE by using a higher layer signaling (e.g., an RRC signaling or an SIB), a physical layer signaling (e.g., DCI) or a combination of these signalings. Furthermore, these configurations may be individually indicated, or may be indicated as jointed information. In a case of the jointed information, for example, that both of A-IS and A-OOS are applied or that both of A-IS and A-OOS are not applied may be indicated.

The UE may report UE capability information related to beam monitoring and/or new beam specification to the base station. This report may be performed by using a higher layer signaling (e.g., RRC signaling), a physical layer signaling (e.g., Uplink Control Information (UCI)) or a combination of these signalings.

For example, the capability information may indicate a maximum number of beams that the UE can monitor or search during the BR procedure.

According to the above-described first embodiment, it is possible to make a configuration to use A-IS and/or A-OOS in a case where use of A-IS and/or A-OOS is appropriate.

### <Second Embodiment>

According to the second embodiment, how to use a BR procedure result to control RLM may be configured to a UE. An A-IS use method (a UE operation based on A-IS) may be configured to the UE. An A-OOS use method (a UE operation based on A-OOS) may be configured to the UE. A specific UE operation will be described in third and fourth embodiments described below.

Information related to these configurations (e.g., configuration information regarding how to use the BR result to control RLM) may be indicated from a base station to the UE by using a higher layer signaling (e.g., an RRC signaling or an SIB), a physical layer signaling (e.g., DCI) or a combination of these signalings. Furthermore, these configurations may be individually indicated, or may be indicated as jointed information.

The jointed information may be, for example, an index, or an index #i may be configured to indicate a UE operation #j based on A-IS and a UE operation #k based on A-OOS.

According to the above-described second embodiment, it is possible to appropriately configure the UE operations based on A-IS and/or A-OOS.

### <Third Embodiment>

The third embodiment relates to a UE operation based on A-IS. At least one of following operations may be defined by a specification, may be used as a default UE operation, or may be configured to the UE by information described in the second embodiment.

According to an embodiment 3.1, the UE does not use (ignores or disables) A-IS. In this case, a UE operation based on A-IS is not performed.

According to an embodiment 3.2, the UE handles A-IS as one IS (equivalent to P-IS) during RLM.

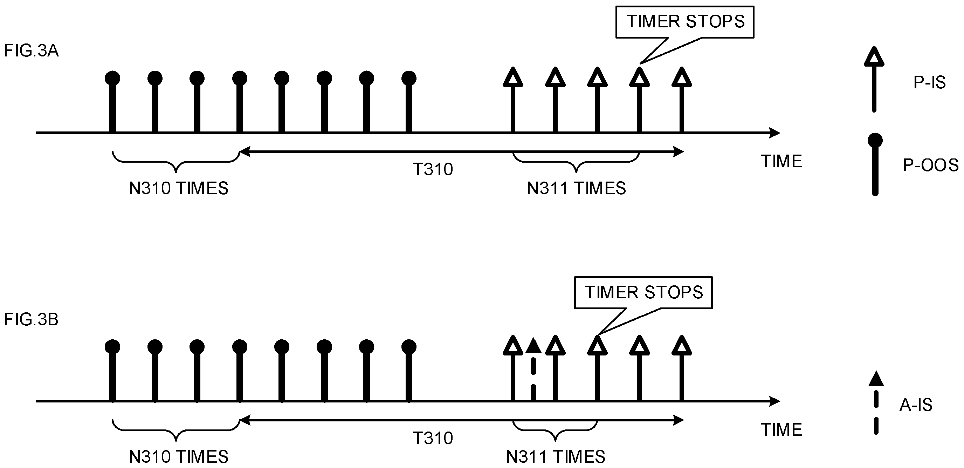

Figs. 3A and 3B are diagrams illustrating one example of RLM control based on the embodiment 3.2. Figs. 3A and 3B assume N310 = N311 = 4.

Fig. 3A illustrates a case where A-IS is not detected during activation of a timer T310. The timer T310 stops when IS occurs N311 times.

Fig. 3B illustrates a case where A-IS is detected during activation of the timer T310. Although A-IS is detected during P-IS in Fig. 3B, detection of A-IS is not limited to this timing. In a case based on the embodiment 3.2, the timer T310 stops when P-IS and A-IS occur N311 times in total.

According to an embodiment 3.3., the UE handles A-IS as a given number of times of IS (equivalent to a given number of times of P-IS) during RLM. Information related to the given number of times may be indicated from a base station to the UE by using a higher layer signaling (e.g., an RRC signaling or an SIB), a physical layer signaling (e.g., DCI) or a combination of these signalings, or may be defined by the specification.

In this regard, when the given number of times is N311 or more, the timer T310 can be immediately stopped according to an indication of A-IS.

According to an embodiment 3.4, the UE delays the timer T310 (a counter of the timer) based on A-IS. "Delay" described herein refers to decreasing a value of the timer T310, or refers to resetting the value of the timer T310 to a given value. A decrease amount of the timer may be indicated by an absolute value (e.g., millisecond), or may be indicated by a rate with respect to a current value or a maximum value (T310). The value configured by the resetting may be 0. In addition, even when the value is reset, the timer T310 is preferably kept active (is not stopped).

Information related to the decrease amount of the timer and the value configured by the resetting may be indicated from the base station to the UE by using a higher layer signaling (e.g., an RRC signaling or an SIB), a physical layer signaling (e.g., DCI) or a combination of these signalings, or may be defined by the specification.

According to an embodiment 3.5, the UE changes a value of N310 and/or a value of N311 based on A-IS. For example, the UE increases the value of N310 and/or decreases the value of N311 based on A-IS. "Increase" described herein may correspond to addition or multiplication of a given value, and "decrease" may correspond to subtraction or division of the given value.

Information related to a change amount (or a change rate) of the value of N310 and a change amount (or a change rate) of the value of N311 may be indicated from the base station to the UE by using a higher layer signaling (e.g., an RRC signaling or an SIB), a physical layer signaling (e.g., DCI) or a combination of these signalings, or may be defined by the specification. In addition, the change amount (or the change rate) of the value of N310 and the change amount (or the change rate) of the value of N311 may be the same or may be different.

The changed value of N310 may be valid until the timer T310 activates. That is, once the timer T310 activates, the UE may reset the value of N310 to a value before the change.

The changed value of N311 may be valid until the timer T310 is stopped, expires or is reset. That is, once the timer T310 is stopped/expires/is reset, the UE may reset the value of N311 to the value before the change.

According to an embodiment 3.6, the UE performs control by using a combination of two or more of the embodiments 3.1 to 3.5. For example, the UE may perform control by using the embodiments 3.2 and 3.5, and perform control by using the embodiments 3.3 and 3.4. In addition, whether a plurality (e.g., all) of two or more embodiments of the combination are concurrently applied or only one embodiment is selected (switched) and applied may be configured by a higher layer signaling, or may be determined by the UE based on a given condition.

According to the above-described third embodiment, it is possible to appropriately configure a UE operation based on A-IS. According to, for example, the embodiments 3.2 to 3.5, it is possible to prevent an RLF from being detected too early.

### <Fourth Embodiment>

The fourth embodiment relates to a UE operation based on A-OOS. At least one of following operations may be defined by a specification, may be used as a default UE operation, or may be configured to the UE by information described in the second embodiment.

According to an embodiment 4.1, the UE does not use (ignores or disables) A-OOS. In this case, a UE operation based on A-OOS is not performed.

According to an embodiment 4.2, the UE handles A-OOS as one OOS (equivalent to P-OOS) during RLM.

According to an embodiment 4.3., the UE handles A-OOS as a given number of times of OOS (equivalent to a given number of times of P-OOS) during RLM. Information related to the given number of times may be indicated from a base station to the UE by using a higher layer signaling (e.g., an RRC signaling or an SIB), a physical layer signaling (e.g., DCI) or a combination of these signalings, or may be defined by the specification.

In this regard, when the given number of times is N310 or more, a timer T310 can be immediately started according to an indication of A-OOS.

According to an embodiment 4.4, the UE increases the timer T310 (a counter of the timer) based on A-OOS. "Increase" described herein refers to increasing a value of the timer T310, or refers to setting the value of the timer T310 to a given value. An increase amount of the timer may be indicated by an absolute value (e.g., millisecond), or may be indicated by a rate with respect to a current value or a maximum value (T310). The value configured by the setting may be a maximum value (T310).

Information related to the increase amount of the timer and the value configured by the setting may be indicated from the base station to the UE by using a higher layer signaling (e.g., an RRC signaling or an SIB), a physical layer signaling (e.g., DCI) or a combination of these signalings, or may be defined by the specification.

According to an embodiment 4.5, the UE changes a value of N310 and/or a value of N311 based on A-OOS. For example, the UE decreases the value of N310 and/or increases the value of N311 based on A-OOS. "Increase" described herein may correspond to addition or multiplication of a given value, and "decrease" may correspond to subtraction or division of the given value.

Information related to a change amount (or a change rate) of the value of N310 and a change amount (or a change rate) of the value of N311 may be indicated from the base station to the UE by using a higher layer signaling (e.g., an RRC signaling or an SIB), a physical layer signaling (e.g., DCI) or a combination of these signalings, or may be defined by the specification. In addition, the change amount (or the change rate) of the value of N310 and the change amount (or the change rate) of the value of N311 may be the same or may be different.

The changed value of N310 may be valid until the timer T310 activates. That is, once the timer T310 activates, the UE may reset the value of N310 to a value before the change.

The changed value of N311 may be valid until the timer T310 is stopped, expires or is reset. That is, once the timer T310 is stopped/expires/is reset, the UE may reset the value of N311 to the value before the change.

According to an embodiment 4.6, the UE performs control by using a combination of two or more of the embodiments 4.1 to 4.5. In addition, whether a plurality (e.g., all) of two or more embodiments of the combination are concurrently applied or only one embodiment is selected (switched) and applied may be configured by a higher layer signaling, or may be determined by the UE based on a given condition.

According to an embodiment 4.7, the UE handles A-OOS as detection of an RLF during RLM.

According to the above-described fourth embodiment, it is possible to appropriately configure a UE operation based on A-IS. According to, for example, the embodiments 4.2 to 4.5 and 4.7, it is possible to prevent an RLF from being detected too late.

### <Fifth Embodiment>

The first and/or second embodiments have described explicit configurations. According to the fifth embodiment, a UE may determine the configurations described in the first and/or second embodiments based on an implicit configuration.

For example, the UE may apply at least one of given UE operations described in the third and fourth embodiments based on a result obtained by comparing the maximum number of beams that can be monitored or searched during a BR procedure, and a given threshold.

Information related to the given threshold may be indicated from a base station to the UE by using a higher layer signaling (e.g., an RRC signaling or an SIB), a physical layer signaling (e.g., DCI) or a combination of these signalings.

Furthermore, the given threshold may be determined based on other configuration information. For example, the other configuration information may be SSB configuration information. In this case, the UE may determine at least one of UE operations to be applied, based on whether or not the number of beams configured for the BR procedure is the number of SSBs or more to be actually transmitted.

Furthermore, the UE may apply at least one of the given UE operations described in the third and fourth embodiments based on whether or not an RS type (e.g., a CSI-RS or an SSB) for monitoring a new candidate beam is the same as an RLM-RS. The RS type for the monitoring may be indicated from the base station by a higher layer signaling, or may be defined by the specification.

When the RS type for monitoring the new candidate beam is different from the RLM-RS, the UE may assume that the given UE operation is applied to RLM. When, for example, the RLM-RS is an SSB and the CSI-RS is used to monitor the new candidate beam, and when the new candidate beam is not specified, the UE may assume that A-OOS is not used for RLM.

Furthermore, the UE may apply at least one of the given UE operations described in the third and fourth embodiments based on whether or not an RS type (e.g., the CSI-RS or the SSB) of the new candidate beam specified (reported) based on measurement is the same as the RLM-RS.

When the RS type of the specified new candidate beam is different from the RLM-RS, the UE may assume that a first UE operation is applied to RLM. When this is not the case, the UE may assume that a second UE operation is applied to RLM.

When, for example, the RLM-RS is the CSI-RS, and both of the CSI-RS and the SSB are used to monitor candidate beams, and when the new candidate beam is specified based on an SS block, the UE may assume that A-OOS is used for RLM. When the new candidate is specified based on the CSI-RS, the UE may assume that A-OOS is not used for RLM.

According to the above-described fifth embodiment, it is possible to reduce an information amount that is necessary to control the UE operation based on A-IS and/or A-OOS.

### (Radio Communication System)

The configuration of the radio communication system according to one embodiment of the present disclosure will be described below. This radio communication system performs communication by using one or a combination of the radio communication method according to each of the above embodiments of the present disclosure.

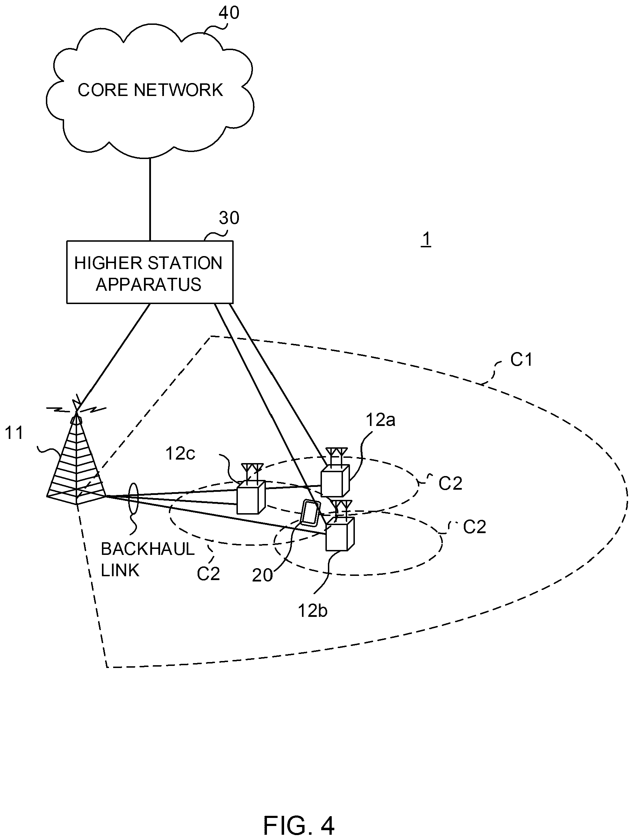

Fig. 4 is a diagram illustrating one example of a schematic configuration of the radio communication system according to the one embodiment. A radio communication system 1 can apply Carrier Aggregation (CA) and/or Dual Connectivity (DC) that aggregate a plurality of base frequency blocks (component carriers) whose 1 unit is a system bandwidth (e.g., 20 MHz) of the LTE system.

In this regard, the radio communication system 1 may be referred to as Long Term Evolution (LTE), LTE-Advanced (LTE-A), LTE-Beyond (LTE-B), SUPER 3G, IMT-Advanced, the 4th generation mobile communication system (4G), the 5th generation mobile communication system (5G), New Radio (NR), Future Radio Access (FRA) and the New Radio Access Technology (New-RAT), or a system that realizes these techniques.

The radio communication system 1 includes a radio base station 11 that forms a macro cell C1 of a relatively wide coverage, and radio base stations 12 (12a to 12c) that are located in the macro cell C1 and form small cells C2 narrower than the macro cell C1. Furthermore, a user terminal 20 is located in the macro cell C1 and each small cell C2. An arrangement and the numbers of respective cells and the user terminals 20 are not limited to the aspect illustrated in Fig. 4.

The user terminal 20 can connect with both of the radio base station 11 and the radio base stations 12. The user terminal 20 is assumed to concurrently use the macro cell C1 and the small cells C2 by using CA or DC. Furthermore, the user terminal 20 can apply CA or DC by using a plurality of cells (CCs) (e.g., five CCs or less or six CCs or more).

The user terminal 20 and the radio base station 11 can communicate by using a carrier (also referred to as a legacy carrier) of a narrow bandwidth in a relatively low frequency band (e.g., 2 GHz). On the other hand, the user terminal 20 and each radio base station 12 may use a carrier of a wide bandwidth in a relatively high frequency band (e.g., 3.5 GHz or 5 GHz) or may use the same carrier as that used between the user terminal 20 and the radio base station 11. In this regard, a configuration of the frequency band used by each radio base station is not limited to this.

Furthermore, the user terminal 20 can perform communication by using Time Division Duplex (TDD) and/or Frequency Division Duplex (FDD) in each cell. Furthermore, each cell (carrier) may be applied a single numerology or may be applied a plurality of different numerologies.

The numerology may be a communication parameter to be applied to transmission and/or reception of a certain signal and/or channel, and may indicate at least one of, for example, a subcarrier-spacing, a bandwidth, a symbol length, a cyclic prefix length, a subframe length, a TTI length, the number of symbols per TTI, a radio frame configuration, filtering processing, and windowing processing.

The radio base station 11 and each radio base station 12 (or the two radio base stations 12) can be configured to be connected by way of wired connection (e.g., optical fibers compliant with a Common Public Radio Interface (CPRI) or an X2 interface) or radio connection.

The radio base station 11 and each radio base station 12 are each connected with a higher station apparatus 30 and connected with a core network 40 via the higher station apparatus 30. In this regard, the higher station apparatus 30 includes, for example, an access gateway apparatus, a Radio Network Controller (RNC) and a Mobility Management Entity (MME), yet is not limited to these. Furthermore, each radio base station 12 may be connected with the higher station apparatus 30 via the radio base station 11.

In this regard, the radio base station 11 is a radio base station that has a relatively wide coverage, and may be referred to as a macro base station, an aggregate node, an eNodeB (eNB) or a transmission/reception point. Furthermore, each radio base station 12 is a radio base station that has a local coverage, and may be referred to as a small base station, a micro base station, a pico base station, a femto base station, a Home eNodeB (HeNB), a Remote Radio Head (RRH) or a transmission/reception point. The radio base stations 11 and 12 will be collectively referred to as a radio base station 10 below when not distinguished.

Each user terminal 20 is a terminal that supports various communication schemes such as LTE and LTE-A, and may include not only a mobile communication terminal (mobile station) but also a fixed communication terminal (fixed station).

The radio communication system 1 applies Orthogonal Frequency-Division Multiple Access (OFDMA) to downlink and Single Carrier-Frequency Division Multiple Access (SC-FDMA) and/or OFDMA to uplink as radio access schemes.

OFDMA is a multicarrier transmission scheme that divides a frequency band into a plurality of narrow frequency bands (subcarriers) and maps data on each subcarrier to perform communication. SC-FDMA is a single carrier transmission scheme that divides a system bandwidth into bands including one or contiguous resource blocks per terminal and causes a plurality of terminals to use respectively different bands to reduce an inter-terminal interference. In this regard, uplink and downlink radio access schemes are not limited to a combination of these, and other radio access schemes may be used.

The radio communication system 1 uses a downlink shared channel (PDSCH: Physical Downlink Shared Channel) shared by each user terminal 20, a broadcast channel (PBCH: Physical Broadcast Channel) and a downlink L1/L2 control channel as downlink channels. User data, higher layer control information and System Information Blocks (SIBs) are conveyed on the PDSCH. Furthermore, Master Information Blocks (MIBs) are conveyed on the PBCH.

The downlink L1/L2 control channel includes a Physical Downlink Control Channel (PDCCH), an Enhanced Physical Downlink Control Channel (EPDCCH), a Physical Control Format Indicator Channel (PCFICH), and a Physical Hybrid-ARQ Indicator Channel (PHICH). Downlink Control Information (DCI) including scheduling information of the PDSCH and/or the PUSCH is conveyed on the PDCCH.

In addition, the scheduling information may be indicated by the DCI. For example, DCI for scheduling DL data reception may be referred to as a DL assignment, and DCI for scheduling UL data transmission may be referred to as a UL grant.

The number of OFDM symbols used for the PDCCH is conveyed on the PCFICH. Transmission acknowledgement information (also referred to as, for example, retransmission control information, HARQ-ACK or ACK/NACK) of a Hybrid Automatic Repeat reQuest (HARQ) for the PUSCH is conveyed on the PHICH. The EPDCCH is subjected to frequency division multiplexing with the PDSCH (downlink shared data channel) and is used to convey DCI similar to the PDCCH.

The radio communication system 1 uses an uplink shared channel (PUSCH: Physical Uplink Shared Channel) shared by each user terminal 20, an uplink control channel (PUCCH: Physical Uplink Control Channel), and a random access channel (PRACH: Physical Random Access Channel) as uplink channels. User data and higher layer control information are conveyed on the PUSCH. Furthermore, downlink radio quality information (CQI: Channel Quality Indicator), transmission acknowledgement information and a Scheduling Request (SR) are conveyed on the PUCCH. A random access preamble for establishing connection with a cell is conveyed on the PRACH.

The radio communication system 1 conveys a Cell-specific Reference Signal (CRS), a Channel State Information-Reference Signal (CSI-RS), a DeModulation Reference Signal (DMRS) and a Positioning Reference Signal (PRS) as downlink reference signals. Furthermore, the radio communication system 1 conveys a Sounding Reference Signal (SRS) and a DeModulation Reference Signal (DMRS) as uplink reference signals. In this regard, the DMRS may be referred to as a user terminal-specific reference signal (UE-specific Reference Signal). Furthermore, a reference signal to be conveyed is not limited to these.

The radio communication system 1 conveys a synchronization signal (e.g., a Primary Synchronization Signal (PSS)/a Secondary Synchronization Signal (SSS)) and a broadcast channel (PBCH: Physical Broadcast Channel). In addition, the synchronization signal and the PBCH may be transmitted in a Synchronization Signal Block (SSB).

### (Radio Base Station)

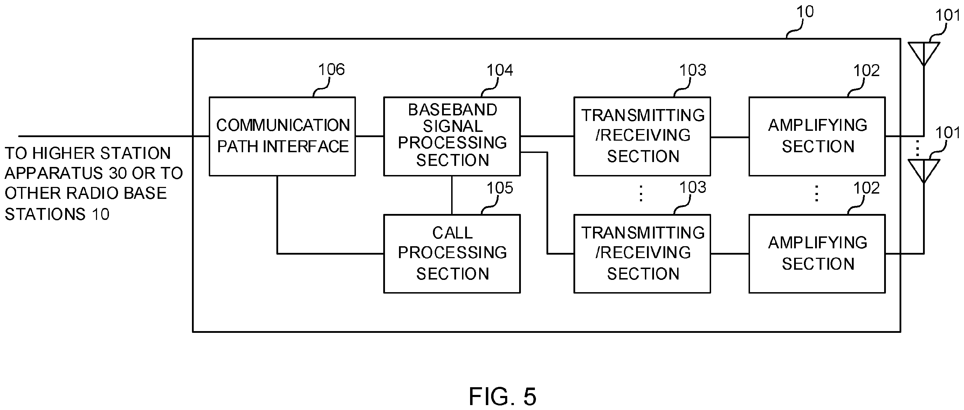

Fig. 5 is a diagram illustrating one example of an overall configuration of the radio base station according to the one embodiment. The radio base station 10 includes pluralities of transmission/reception antennas 101, amplifying sections 102 and transmitting/receiving sections 103, a baseband signal processing section 104, a call processing section 105 and a channel interface 106. In this regard, the radio base station 10 only needs to be configured to include one or more of each of the transmission/reception antennas 101, the amplifying sections 102 and the transmitting/receiving sections 103.

User data transmitted from the radio base station 10 to the user terminal 20 on downlink is input from the higher station apparatus 30 to the baseband signal processing section 104 via the channel interface 106.

The baseband signal processing section 104 performs processing of a Packet Data Convergence Protocol (PDCP) layer, segmentation and concatenation of the user data, transmission processing of a Radio Link Control (RLC) layer such as RLC retransmission control, Medium Access Control (MAC) retransmission control (e.g., HARQ transmission processing), and transmission processing such as scheduling, transmission format selection, channel coding, Inverse Fast Fourier Transform (IFFT) processing, and precoding processing on the user data, and transfers the user data to each transmitting/receiving section 103. Furthermore, the baseband signal processing section 104 performs transmission processing such as channel coding and inverse fast Fourier transform on a downlink control signal, too, and transfers the downlink control signal to each transmitting/receiving section 103.

Each transmitting/receiving section 103 converts a baseband signal precoded and output per antenna from the baseband signal processing section 104 into a radio frequency range, and transmits a radio frequency signal. The radio frequency signal subjected to frequency conversion by each transmitting/receiving section 103 is amplified by each amplifying section 102, and is transmitted from each transmission/reception antenna 101. The transmitting/receiving sections 103 can be composed of transmitters/receivers, transmission/reception circuits or transmission/reception apparatuses described based on a common knowledge in a technical field according to the present disclosure. In this regard, the transmitting/receiving sections 103 may be composed as an integrated transmitting/receiving section or may be composed of transmitting sections and receiving sections.

Meanwhile, each amplifying section 102 amplifies a radio frequency signal received by each transmission/reception antenna 101 as an uplink signal. Each transmitting/receiving section 103 receives the uplink signal amplified by each amplifying section 102. Each transmitting/receiving section 103 performs frequency conversion on the received signal into a baseband signal, and outputs the baseband signal to the baseband signal processing section 104.

The baseband signal processing section 104 performs Fast Fourier Transform (FFT) processing, Inverse Discrete Fourier Transform (IDFT) processing, error correcting decoding, MAC retransmission control reception processing, and reception processing of an RLC layer and a PDCP layer on user data included in the input uplink signal, and transfers the user data to the higher station apparatus 30 via the channel interface 106. The call processing section 105 performs call processing (configuration and release) of a communication channel, state management of the radio base station 10, and radio resource management.

The channel interface 106 transmits and receives signals to and from the higher station apparatus 30 via a given interface. Furthermore, the channel interface 106 may transmit and receive (backhaul signaling) signals to and from the another radio base station 10 via an inter-base station interface (e.g., optical fibers compliant with the Common Public Radio Interface (CPRI) or the X2 interface).

In addition, each transmitting/receiving section 103 may further include an analog beam forming section that performs analog beam forming. The analog beam forming section can be composed of an analog beam forming circuit (e.g., a phase shifter or a phase shift circuit) or an analog beam forming apparatus (e.g., a phase shifter) described based on the common knowledge in the technical field according to the present invention. Furthermore, each transmission/reception antenna 101 can be composed of an array antenna, for example. Furthermore, each transmitting/receiving section 103 is configured to be able to apply single BF or multiple BF.

Each transmitting/receiving section 103 may transmit a signal by using a transmission beam, or receive a signal by using a reception beam. Each transmitting/receiving section 103 may transmit and/or receive a signal by using a given beam determined by the control section 301.

Each transmitting/receiving section 103 may receive various pieces of information described in the embodiments of the radio communication method from the user terminal 20, and/or transmit the various pieces of information to the user terminal 20. For example, each transmitting/receiving section 103 may transmit information related to whether or not it is possible to perform control of RLM based on a BR result. Each transmitting/receiving section 103 may transmit configuration information regarding how to use the BR result to control RLM. Each transmitting/receiving section 103 may receive information related to the BR result.

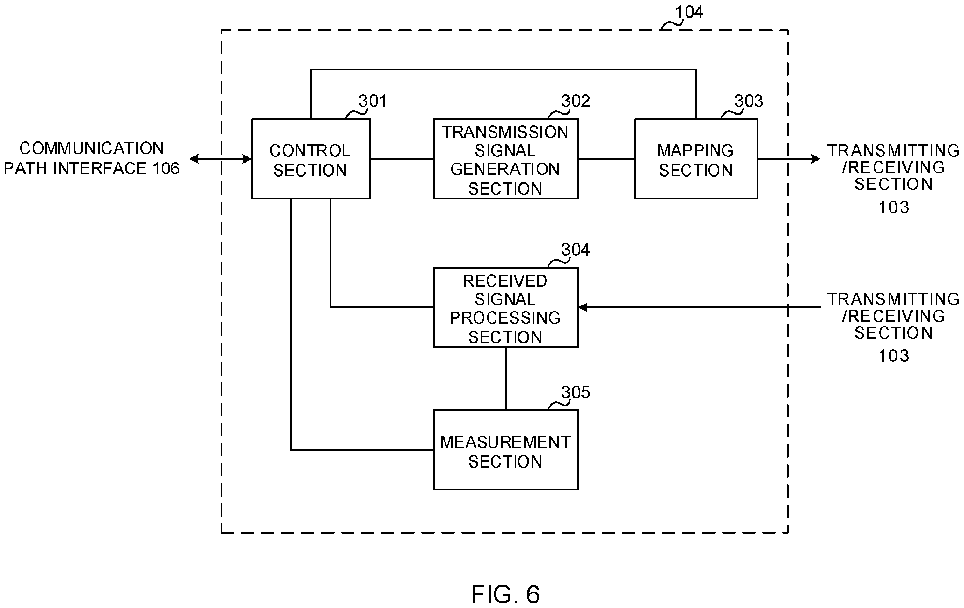

Fig. 6 is a diagram illustrating one example of a function configuration of the radio base station according to the one embodiment. In addition, this example mainly illustrates function blocks of characteristic portions according to the present embodiment, and assumes that the radio base station 10 includes other function blocks, too, that are necessary for radio communication.

The baseband signal processing section 104 includes at least a control section (scheduler) 301, a transmission signal generating section 302, a mapping section 303, a received signal processing section 304 and a measurement section 305. In addition, these components only need to be included in the radio base station 10, and part or all of the components may not be included in the baseband signal processing section 104.

The control section (scheduler) 301 controls the entire radio base station 10. The control section 301 can be composed of a controller, a control circuit or a control apparatus described based on the common knowledge in the technical field according to the present disclosure.

The control section 301 controls, for example, signal generation of the transmission signal generating section 302 and signal allocation of the mapping section 303. Furthermore, the control section 301 controls signal reception processing of the received signal processing section 304 and signal measurement of the measurement section 305.

The control section 301 controls scheduling (e.g., resource allocation) of system information, a downlink data signal (e.g., a signal transmitted on the PDSCH), and a downlink control signal (e.g., a signal that is transmitted on the PDCCH and/or the EPDCCH and is, for example, transmission acknowledgement information). Furthermore, the control section 301 controls generation of a downlink control signal and a downlink data signal based on a result obtained by determining whether or not it is necessary to perform retransmission control on an uplink data signal.

Furthermore, the control section 301 controls scheduling of synchronization signals (e.g., a PSS/an SSS) and downlink reference signals (e.g., a CRS, a CSI-RS and a DMRS).

The control section 301 controls scheduling of an uplink data signal (e.g., a signal that is transmitted on the PUSCH), an uplink control signal (e.g., a signal that is transmitted on the PUCCH and/or the PUSCH and is, for example, transmission acknowledgement information), a random access preamble (e.g., a signal that is transmitted on the PRACH) and an uplink reference signal.

The control section 301 may perform control to form the transmission beam and/or the reception beam by using digital BF (e.g., precoding) of the baseband signal processing section 104 and/or analog BF (e.g., phase rotation) of each transmitting/receiving section 103.

The control section 301 may control Beam Recovery (BR) for the user terminal 20. The control section 301 may transmit given information (e.g., information related to whether or not it is possible to perform control of RLM based on the BR result) to the user terminal 20, and cause the user terminal 20 to make decision on the control of the RLM based on the BR result.

The transmission signal generating section 302 generates a downlink signal (such as a downlink control signal, a downlink data signal or a downlink reference signal) based on an instruction from the control section 301, and outputs the downlink signal to the mapping section 303. The transmission signal generating section 302 can be composed of a signal generator, a signal generating circuit or a signal generating apparatus described based on the common knowledge in the technical field according to the present disclosure.

The transmission signal generating section 302 generates, for example, a DL assignment for indicating downlink data allocation information, and/or a UL grant for indicating uplink data allocation information based on the instruction from the control section 301. The DL assignment and the UL grant are both DCI, and conform to a DCI format. Furthermore, the transmission signal generating section 302 performs encoding processing and modulation processing on a downlink data signal according to a code rate and a modulation scheme determined based on Channel State Information (CSI) from each user terminal 20.

The mapping section 303 maps the downlink signal generated by the transmission signal generating section 302, on given radio resources based on the instruction from the control section 301, and outputs the downlink signal to each transmitting/receiving section 103. The mapping section 303 can be composed of a mapper, a mapping circuit or a mapping apparatus described based on the common knowledge in the technical field according to the present disclosure.

The received signal processing section 304 performs reception processing (e.g., demapping, demodulation and decoding) on a received signal input from each transmitting/receiving section 103. In this regard, the received signal is, for example, an uplink signal (such as an uplink control signal, an uplink data signal or an uplink reference signal) transmitted from the user terminal 20. The received signal processing section 304 can be composed of a signal processor, a signal processing circuit or a signal processing apparatus described based on the common knowledge in the technical field according to the present disclosure.

The received signal processing section 304 outputs information decoded by the reception processing to the control section 301. When, for example, receiving the PUCCH including HARQ-ACK, the received signal processing section 304 outputs the HARQ-ACK to the control section 301. Furthermore, the received signal processing section 304 outputs the received signal and/or the signal after the reception processing to the measurement section 305.

The measurement section 305 performs measurement related to the received signal. The measurement section 305 can be composed of a measurement instrument, a measurement circuit or a measurement apparatus described based on the common knowledge in the technical field according to the present disclosure.

For example, the measurement section 305 may perform Radio Resource Management (RRM) measurement or Channel State Information (CSI) measurement based on the received signal. The measurement section 305 may measure received power (e.g., Reference Signal Received Power (RSRP)), received quality (e.g., Reference Signal Received Quality (RSRQ), a Signal to Interference plus Noise Ratio (SINR) or a Signal to Noise Ratio (SNR)), a signal strength (e.g., Received Signal Strength Indicator (RSSI)) or channel information (e.g., CSI). The measurement section 305 may output a measurement result to the control section 301.

### (User Terminal)

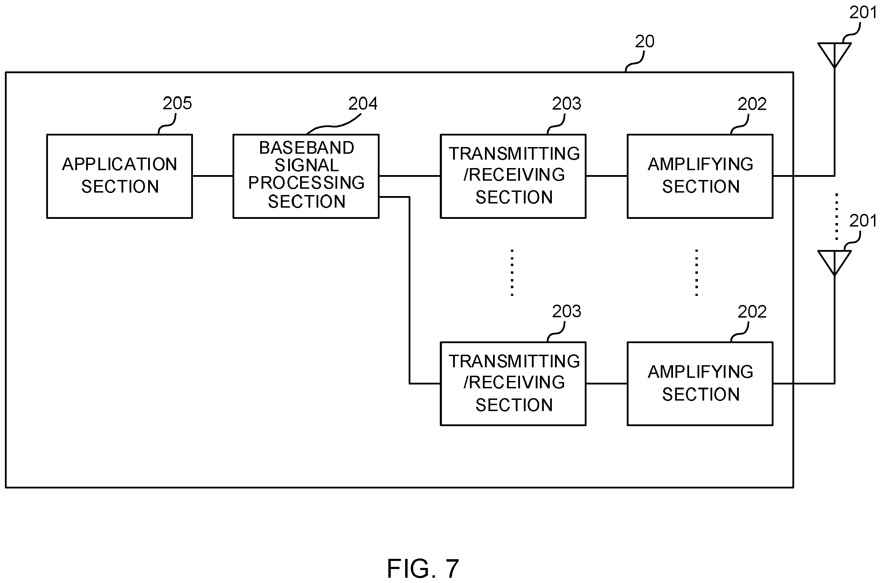

Fig. 7 is a diagram illustrating one example of an overall configuration of the user terminal according to the one embodiment. The user terminal 20 includes pluralities of transmission/reception antennas 201, amplifying sections 202 and transmitting/receiving sections 203, a baseband signal processing section 204 and an application section 205. In this regard, the user terminal 20 only needs to be configured to include one or more of each of the transmission/reception antennas 201, the amplifying sections 202 and the transmitting/receiving sections 203.

Each amplifying section 202 amplifies a radio frequency signal received at each transmission/reception antenna 201. Each transmitting/receiving section 203 receives a downlink signal amplified by each amplifying section 202. Each transmitting/receiving section 203 performs frequency conversion on the received signal into a baseband signal, and outputs the baseband signal to the baseband signal processing section 204. The transmitting/receiving sections 203 can be composed of transmitters/receivers, transmission/reception circuits or transmission/reception apparatuses described based on the common knowledge in the technical field according to the present disclosure. In this regard, the transmitting/receiving sections 203 may be composed as an integrated transmitting/receiving section or may be composed of transmitting sections and receiving sections.

The baseband signal processing section 204 performs FFT processing, error correcting decoding, and retransmission control reception processing on the input baseband signal. The baseband signal processing section 204 transfers downlink user data to the application section 205. The application section 205 performs processing related to layers higher than a physical layer and an MAC layer. Furthermore, the baseband signal processing section 204 may transfer broadcast information of the downlink data, too, to the application section 205.

On the other hand, the application section 205 inputs uplink user data to the baseband signal processing section 204. The baseband signal processing section 204 performs retransmission control transmission processing (e.g., HARQ transmission processing), channel coding, precoding, Discrete Fourier Transform (DFT) processing and IFFT processing on the uplink user data, and transfers the uplink user data to each transmitting/receiving section 203.

Each transmitting/receiving section 203 converts the baseband signal output from the baseband signal processing section 204 into a radio frequency range, and transmits a radio frequency signal. The radio frequency signal subjected to the frequency conversion by each transmitting/receiving section 203 is amplified by each amplifying section 202, and is transmitted from each transmission/reception antenna 201.

In addition, each transmitting/receiving section 203 may further include an analog beam forming section that performs analog beam forming. The analog beam forming section can be composed of an analog beam forming circuit (e.g., a phase shifter or a phase shift circuit) or an analog beam forming apparatus (e.g., a phase shifter) described based on the common knowledge in the technical field according to the present invention. Furthermore, each transmission/reception antenna 201 can be composed of an array antenna, for example. Furthermore, each transmitting/receiving section 203 is configured to be able to apply single BF and multiple BF.

Each transmitting/receiving section 203 may transmit a signal by using the transmission beam, and receive a signal by using the reception beam. Each transmitting/receiving section 203 may transmit and/or receive a signal by using a given beam determined by the control section 401.

Each transmitting/receiving section 203 may receive the various pieces of information described in the embodiments of the radio communication method from the radio base station 10, and/or transmit the various pieces of information to the radio base station 10. For example, each transmitting/receiving section 203 may receive from the radio base station 10 the information related to whether or not it is possible to perform control of RLM based on the BR result. Each transmitting/receiving section 203 may receive from the radio base station 10 the configuration information regarding how to use the BR result to control RLM. Each transmitting/receiving section 203 may transmit the information related to the BR result to the radio base station 10.

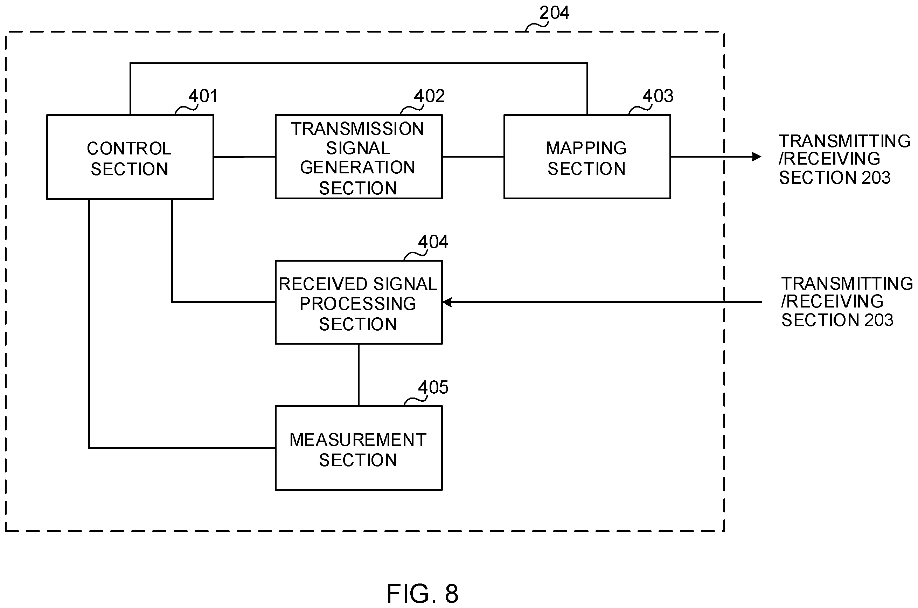

Fig. 8 is a diagram illustrating one example of a function configuration of the user terminal according to the one embodiment. In addition, this example mainly illustrates function blocks of characteristic portions according to the present embodiment, and assumes that the user terminal 20 includes other function blocks, too, that are necessary for radio communication.

The baseband signal processing section 204 of the user terminal 20 includes at least a control section 401, a transmission signal generating section 402, a mapping section 403, a received signal processing section 404 and a measurement section 405. In addition, these components only need to be included in the user terminal 20, and part or all of the components may not be included in the baseband signal processing section 204.

The control section 401 controls the entire user terminal 20. The control section 401 can be composed of a controller, a control circuit or a control apparatus described based on the common knowledge in the technical field according to the present disclosure.

The control section 401 controls, for example, signal generation of the transmission signal generating section 402 and signal allocation of the mapping section 403. Furthermore, the control section 401 controls signal reception processing of the received signal processing section 404 and signal measurement of the measurement section 405.

The control section 401 obtains from the received signal processing section 404 a downlink control signal and a downlink data signal transmitted from the radio base station 10. The control section 401 controls generation of an uplink control signal and/or an uplink data signal based on a result obtained by determining whether or not it is necessary to perform retransmission control on the downlink control signal and/or the downlink data signal.

The control section 401 may perform control to form the transmission beam and/or the reception beam by using digital BF (e.g., precoding) of the baseband signal processing section 204 and/or analog BF (e.g., phase rotation) of each transmitting/receiving section 203.

The control section 401 may control Radio Link Monitoring (RLM) based on a measurement result of the measurement section 405. Based on the information obtained from the received signal processing section 404, the control section 401 may determine whether or not to perform control of RLM based on the Beam Recovery (BR) result.

The BR result may be a BR procedure result or an indication based on a BR result, and may indicate, for example, a BR failure or a BR success. The indication based on the BR result may be indicated from a physical layer to a higher layer in the user terminal 20.

Based on, for example, the information related to whether or not it is possible to perform control of RLM based on the BR result, the control section 401 may determine whether or not to perform the control of the RLM based on the BR result.

Based on the configuration information regarding how to use the BR result to control RLM, the control section 401 may perform the control of the RLM based on the BR result.

The control section 401 may regard (assume) the indication based on the BR result as one or more indications of an In-Sync (IS) state and/or an Out-Of-Sync (OOS) state during RLM.

The control section 401 may change (increase or decrease) a counter of a timer (e.g., T310) during RLM according to the indication based on the BR result.

The control section 401 may change (increase or decrease) the number of times of the indication of IS and/or OOS (e.g., N310 or N311) that is necessary to control the timer during RLM according to the indication based on the BR result.

Furthermore, when obtaining from the received signal processing section 404 the various pieces of information indicated from the radio base station 10, the control section 401 may update parameters used for control based on the various pieces of information.

The transmission signal generating section 402 generates an uplink signal (such as an uplink control signal, an uplink data signal or an uplink reference signal) based on an instruction from the control section 401, and outputs the uplink signal to the mapping section 403. The transmission signal generating section 402 can be composed of a signal generator, a signal generating circuit or a signal generating apparatus described based on the common knowledge in the technical field according to the present disclosure.

The transmission signal generating section 402 generates an uplink control signal related to transmission acknowledgement information and Channel State Information (CSI) based on, for example, the instruction from the control section 401. Furthermore, the transmission signal generating section 402 generates an uplink data signal based on the instruction from the control section 401. When, for example, the downlink control signal indicated from the radio base station 10 includes a UL grant, the transmission signal generating section 402 is instructed by the control section 401 to generate an uplink data signal.

The mapping section 403 maps the uplink signal generated by the transmission signal generating section 402, on radio resources based on the instruction from the control section 401, and outputs the uplink signal to each transmitting/receiving section 203. The mapping section 403 can be composed of a mapper, a mapping circuit or a mapping apparatus described based on the common knowledge in the technical field according to the present disclosure.

The received signal processing section 404 performs reception processing (e.g., demapping, demodulation and decoding) on the received signal input from each transmitting/receiving section 203. In this regard, the received signal is, for example, a downlink signal (such as a downlink control signal, a downlink data signal or a downlink reference signal) transmitted from the radio base station 10. The received signal processing section 404 can be composed of a signal processor, a signal processing circuit or a signal processing apparatus described based on the common knowledge in the technical field according to the present disclosure. Furthermore, the received signal processing section 404 can compose the receiving section according to the present disclosure.

The received signal processing section 404 outputs information decoded by the reception processing to the control section 401. The received signal processing section 404 outputs, for example, broadcast information, system information, an RRC signaling and DCI to the control section 401. Furthermore, the received signal processing section 404 outputs the received signal and/or the signal after the reception processing to the measurement section 405.

The measurement section 405 performs measurement related to the received signal. The measurement section 405 can be composed of a measurement instrument, a measurement circuit or a measurement apparatus described based on the common knowledge in the technical field according to the present disclosure.

For example, the measurement section 405 may perform RRM measurement or CSI measurement based on the received signal. The measurement section 405 may measure received power (e.g., RSRP), received quality (e.g., RSRQ, an SINR or an SNR), a signal strength (e.g., RSSI) or channel information (e.g., CSI). The measurement section 405 may output a measurement result to the control section 401.

### (Hardware Configuration)

In addition, the block diagrams used to describe the above embodiments illustrate blocks in function units. These function blocks (components) are realized by an optional combination of hardware and/or software. Furthermore, a method for realizing each function block is not limited in particular. That is, each function block may be realized by using one physically and/or logically coupled apparatus or may be realized by using a plurality of these apparatuses formed by connecting two or more physically and/or logically separate apparatuses directly and/or indirectly (by using, for example, wired connection and/or radio connection).

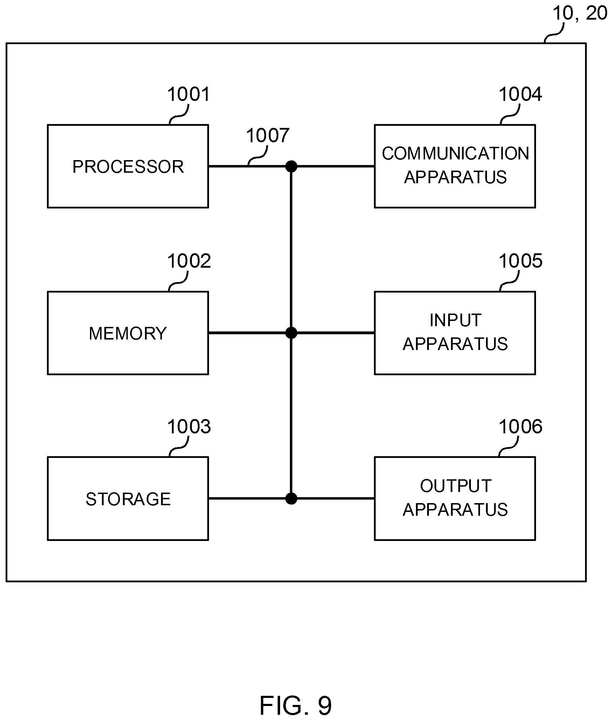

For example, the radio base station and the user terminal according to the one embodiment of the present disclosure may function as computers that perform processing of the radio communication method according to the present disclosure. Fig. 9 is a diagram illustrating one example of the hardware configurations of the radio base station and the user terminal according to the one embodiment. The above-described radio base station 10 and user terminal 20 may be each physically configured as a computer apparatus that includes a processor 1001, a memory 1002, a storage 1003, a communication apparatus 1004, an input apparatus 1005, an output apparatus 1006 and a bus 1007.

In this regard, a word "apparatus" in the following description can be read as a circuit, a device or a unit. The hardware configurations of the radio base station 10 and the user terminal 20 may be configured to include one or a plurality of apparatuses illustrated in Fig. 9 or may be configured without including part of the apparatuses.

For example, Fig. 9 illustrates the only one processor 1001. However, there may be a plurality of processors. Furthermore, processing may be executed by 1 processor or processing may be executed by 1 or more processors concurrently, successively or by using another method. In addition, the processor 1001 may be implemented by 1 or more chips.

Each function of the radio base station 10 and the user terminal 20 is realized by, for example, causing hardware such as the processor 1001 and the memory 1002 to read given software (program), and thereby causing the processor 1001 to perform an operation, and control communication via the communication apparatus 1004 and reading and/or writing of data in the memory 1002 and the storage 1003.

The processor 1001 causes, for example, an operating system to operate to control the entire computer. The processor 1001 may be composed of a Central Processing Unit (CPU) including an interface for a peripheral apparatus, a control apparatus, an operation apparatus and a register. For example, the above-described baseband signal processing section 104 (204) and call processing section 105 may be realized by the processor 1001.

Furthermore, the processor 1001 reads programs (program codes), a software module or data from the storage 1003 and/or the communication apparatus 1004 out to the memory 1002, and executes various types of processing according to these programs, software module or data. As the programs, programs that cause the computer to execute at least part of the operations described in the above embodiments are used. For example, the control section 401 of the user terminal 20 may be realized by a control program that is stored in the memory 1002 and operates on the processor 1001, and other function blocks may be also realized likewise.

The memory 1002 is a computer-readable recording medium, and may be composed of at least one of, for example, a Read Only Memory (ROM), an Erasable Programmable ROM (EPROM), an Electrically EPROM (EEPROM), a Random Access Memory (RAM) and other appropriate storage media. The memory 1002 may be referred to as a register, a cache or a main memory (main storage apparatus). The memory 1002 can store programs (program codes) and a software module that can be executed to perform the radio communication method according to the one embodiment.

The storage 1003 is a computer-readable recording medium, and may be composed of at least one of, for example, a flexible disk, a floppy (registered trademark) disk, a magnetooptical disk (e.g., a compact disk (Compact Disc ROM (CD-ROM)), a digital versatile disk and a Blu-ray (registered trademark) disk), a removable disk, a hard disk drive, a smart card, a flash memory device (e.g., a card, a stick or a key drive), a magnetic stripe, a database, a server and other appropriate storage media. The storage 1003 may be referred to as an auxiliary storage apparatus.

The communication apparatus 1004 is hardware (transmission/reception device) that performs communication between computers via wired and/or radio networks, and will be also referred to as, for example, a network device, a network controller, a network card and a communication module. The communication apparatus 1004 may be configured to include a high frequency switch, a duplexer, a filter and a frequency synthesizer to realize, for example, Frequency Division Duplex (FDD) and/or Time Division Duplex (TDD). For example, the above-described transmission/reception antennas 101 (201), amplifying sections 102 (202), transmitting/receiving sections 103 (203) and channel interface 106 may be realized by the communication apparatus 1004.

The input apparatus 1005 is an input device (e.g., a keyboard, a mouse, a microphone, a switch, a button or a sensor) that accepts an input from an outside. The output apparatus 1006 is an output device (e.g., a display, a speaker or a Light Emitting Diode (LED) lamp) that sends an output to the outside. In addition, the input apparatus 1005 and the output apparatus 1006 may be an integrated component (e.g., touch panel).

Furthermore, each apparatus such as the processor 1001 or the memory 1002 is connected by the bus 1007 that communicates information. The bus 1007 may be composed by using a single bus or may be composed by using a bus that differs per apparatus.

Furthermore, the radio base station 10 and the user terminal 20 may be configured to include hardware such as a microprocessor, a Digital Signal Processor (DSP), an Application Specific Integrated Circuit (ASIC), a Programmable Logic Device (PLD) and a Field Programmable Gate Array (FPGA). The hardware may be used to realize part or all of each function block. For example, the processor 1001 may be implemented by using at least one of these types of hardware.

### (Modified Example)

In addition, each term that has been described in this description and/or each term that is necessary to understand this description may be replaced with terms having identical or similar meanings. For example, a channel and/or a symbol may be signals (signalings). Furthermore, a signal may be a message. A reference signal can be also abbreviated as an RS (Reference Signal), or may be also referred to as a pilot or a pilot signal depending on standards to be applied. Furthermore, a Component Carrier (CC) may be referred to as a cell, a frequency carrier and a carrier frequency.

Furthermore, a radio frame may include one or a plurality of durations (frames) in a time-domain. Each of one or a plurality of durations (frames) that composes a radio frame may be referred to as a subframe. Furthermore, the subframe may include one or a plurality of slots in the time-domain. The subframe may be a fixed time duration (e.g., 1 ms) that does not depend on the numerologies.

Furthermore, the slot may include one or a plurality of symbols (Orthogonal Frequency Division Multiplexing (OFDM) symbols or Single Carrier-Frequency Division Multiple Access (SC-FDMA) symbols) in the time-domain. Furthermore, the slot may be a time unit based on the numerologies. Furthermore, the slot may include a plurality of mini slots. Each mini slot may include one or a plurality of symbols in the time-domain. Furthermore, the mini slot may be referred to as a subslot.

The radio frame, the subframe, the slot, the mini slot and the symbol each indicate a time unit for conveying signals. The other corresponding names may be used for the radio frame, the subframe, the slot, the mini slot and the symbol. For example, 1 subframe may be referred to as a Transmission Time Interval (TTI), a plurality of contiguous subframes may be referred to as TTIs, or 1 slot or 1 mini slot may be referred to as a TTI. That is, the subframe and/or the TTI may be a subframe (1 ms) according to legacy LTE, may be a duration (e.g., 1 to 13 symbols) shorter than 1 ms or may be a duration longer than 1 ms. In addition, a unit that indicates the TTI may be referred to as a slot or a mini slot instead of a subframe.

In this regard, the TTI refers to, for example, a minimum time unit of scheduling for radio communication. For example, in the LTE system, the radio base station performs scheduling for allocating radio resources (a frequency bandwidth or transmission power that can be used in each user terminal) in TTI units to each user terminal. In this regard, a definition of the TTI is not limited to this.

The TTI may be a transmission time unit of a channel-coded data packet (transport block), code block and/or codeword, or may be a processing unit of scheduling or link adaptation. In addition, when the TTI is given, a time period (e.g., the number of symbols) in which a transport block, a code block and/or a codeword are actually mapped may be shorter than the TTI.

In addition, when 1 slot or 1 mini slot is referred to as a TTI, 1 or more TTIs (i.e., 1 or more slots or 1 or more mini slots) may be a minimum time unit of scheduling. Furthermore, the number of slots (the number of mini slots) that compose a minimum time unit of the scheduling may be controlled.

The TTI having the time duration of 1 ms may be referred to as a general TTI (TTIs according to LTE Rel. 8 to 12), a normal TTI, a long TTI, a general subframe, a normal subframe or a long subframe. A TTI shorter than the general TTI may be referred to as a reduced TTI, a short TTI, a partial or fractional TTI, a reduced subframe, a short subframe, a mini slot or a subslot.

In addition, the long TTI (e.g., the general TTI or the subframe) may be read as a TTI having a time duration exceeding 1 ms, and the short TTI (e.g., the reduced TTI) may be read as a TTI having a TTI length less than the TTI length of the long TTI and equal to or more than 1 ms.

Resource Blocks (RBs) are resource allocation units of the time-domain and the frequency-domain, and may include one or a plurality of contiguous subcarriers in the frequency-domain. Furthermore, the RB may include one or a plurality of symbols in the time-domain or may have the length of 1 slot, 1 mini slot, 1 subframe or 1 TTI. 1 TTI or 1 subframe may each include one or a plurality of resource blocks. In this regard, one or a plurality of RBs may be referred to as a Physical Resource Block (PRB: Physical RB), a Sub-Carrier Group (SCG), a Resource Element Group (REG), a PRB pair or an RB pair.

Furthermore, the resource block may include one or a plurality of Resource Elements (REs). For example, 1 RE may be a radio resource domain of 1 subcarrier and 1 symbol.

In this regard, structures of the above-described radio frame, subframe, slot, mini slot and symbol are only exemplary structures. For example, configurations such as the number of subframes included in a radio frame, the number of slots per subframe or radio frame, the number of mini slots included in a slot, the numbers of symbols and RBs included in a slot or a mini slot, the number of subcarriers included in an RB, the number of symbols in a TTI, a symbol length and a Cyclic Prefix (CP) length can be variously changed.

Furthermore, the information and parameters described in this description may be expressed by using absolute values, may be expressed by using relative values with respect to given values or may be expressed by using other corresponding information. For example, a radio resource may be instructed by a given index.

Names used for parameters in this description are in no respect restrictive names. For example, various channels (the Physical Uplink Control Channel (PUCCH) and the Physical Downlink Control Channel (PDCCH)) and information elements can be identified based on various suitable names. Therefore, various names assigned to these various channels and information elements are in no respect restrictive names.

The information and the signals described in this description may be expressed by using one of various different techniques. For example, the data, the instructions, the commands, the information, the signals, the bits, the symbols and the chips mentioned in the above entire description may be expressed as voltages, currents, electromagnetic waves, magnetic fields or magnetic particles, optical fields or photons, or optional combinations of these.

Furthermore, the information and the signals can be output from a higher layer to a lower layer and/or from the lower layer to the higher layer. The information and the signals may be input and output via a plurality of network nodes.

The input and output information and signals may be stored in a specific location (e.g., memory) or may be managed by using a management table. The information and signals to be input and output can be overwritten, updated or additionally written. The output information and signals may be deleted. The input information and signals may be transmitted to other apparatuses.

An indication of information is not limited to the aspect/embodiments described in this description and may be performed by using other methods. For example, the information may be indicated by a physical layer signaling (e.g., Downlink Control Information (DCI) and Uplink Control Information (UCI)), a higher layer signaling (e.g., a Radio Resource Control (RRC) signaling, broadcast information (Master Information Blocks (MIBs) and System Information Blocks (SIBs)), and a Medium Access Control (MAC) signaling), other signals or combinations of these.

In addition, the physical layer signaling may be referred to as Layer 1/Layer 2 (L1/L2) control information (L1/L2 control signal) or L1 control information (L1 control signal). Furthermore, the RRC signaling may be referred to as an RRC message, and may be, for example, an RRCConnectionSetup message or an RRCConnectionReconfiguration message. Furthermore, the MAC signaling may be indicated by using, for example, an MAC Control Element (MAC CE).

Furthermore, an indication of given information (e.g., an indication of "being X") is not limited to an explicit indication, and may be performed implicitly (by, for example, not indicating this given information or by indicating another information).

Decision may be made based on a value (0 or 1) expressed as 1 bit, may be made based on a boolean expressed as true or false or may be made by comparing numerical values (by, for example, making comparison with a given value).

Irrespectively of whether software is referred to as software, firmware, middleware, a microcode or a hardware description language or as other names, the software should be widely interpreted to mean a command, a command set, a code, a code segment, a program code, a program, a subprogram, a software module, an application, a software application, a software package, a routine, a subroutine, an object, an executable file, an execution thread, a procedure or a function.

Furthermore, software, commands and information may be transmitted and received via transmission media. When, for example, the software is transmitted from websites, servers or other remote sources by using wired techniques (e.g., coaxial cables, optical fiber cables, twisted pairs and Digital Subscriber Lines (DSL)) and/or radio techniques (e.g., infrared rays and microwaves), these wired techniques and/or radio techniques are included in a definition of the transmission media.

The terms "system" and "network" used in this description are compatibly used.

In this description, the terms "Base Station (BS)", "radio base station", "eNB", "gNB", "cell", "sector", "cell group", "carrier" and "component carrier" can be compatibly used. The base station will be also referred to as a term such as a fixed station, a NodeB, an eNodeB (eNB), an access point, a transmission point, a reception point, a femtocell or a small cell in some cases.

The base station can accommodate one or a plurality of (e.g., three) cells (also referred to as sectors). When the base station accommodates a plurality of cells, an entire coverage area of the base station can be partitioned into a plurality of smaller areas. Each smaller area can also provide communication service via a base station subsystem (e.g., indoor small base station (RRH: Remote Radio Head)). The term "cell" or "sector" indicates part or the entirety of the coverage area of the base station and/or the base station subsystem that provide communication service in this coverage.

In this description, the terms "Mobile Station (MS)", "user terminal", "User Equipment (UE)" and "terminal" can be compatibly used.

The mobile station will be also referred to by a person skilled in the art as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client or some other appropriate terms in some cases.

Furthermore, the radio base station in this description may be read as the user terminal. For example, each aspect/embodiment of the present disclosure may be applied to a configuration where communication between the radio base station and the user terminal is replaced with communication between a plurality of user terminals (D2D: Device-to-Device). In this case, the user terminal 20 may be configured to include the functions of the above-described radio base station 10. Furthermore, words such as "uplink" and "downlink" may be read as a "side". For example, the uplink channel may be read as a side channel.

Similarly, the user terminal in this description may be read as the radio base station. In this case, the radio base station 10 may be configured to include the functions of the above-described user terminal 20.

In this description, operations performed by the base station are performed by an upper node of this base station depending on cases. Obviously, in a network including one or a plurality of network nodes including the base stations, various operations performed to communicate with a terminal can be performed by base stations, one or more network nodes (that are supposed to be, for example, Mobility Management Entities (MMEs) or Serving-Gateways (S-GWs) yet are not limited to these) other than the base stations or a combination of these.

Each aspect/embodiment described in this description may be used alone, may be used in combination or may be switched and used when carried out. Furthermore, orders of the processing procedures, the sequences and the flowchart according to each aspect/embodiment described in this description may be rearranged unless contradictions arise. For example, the method described in this description presents various step elements in an exemplary order and is not limited to the presented specific order.

Each aspect/embodiment described in this description may be applied to Long Term Evolution (LTE), LTE-Advanced (LTE-A), LTE-Beyond (LTE-B), SUPER 3G, IMT-Advanced, the 4th generation mobile communication system (4G), the 5th generation mobile communication system (5G), Future Radio Access (FRA), the New Radio Access Technology (New-RAT), New Radio (NR), New radio access (NX), Future generation radio access (FX), Global System for Mobile communications (GSM) (registered trademark), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other appropriate radio communication methods and/or next-generation systems that are expanded based on these systems.

The phrase "based on" used in this description does not mean "based only on" unless specified otherwise. In other words, the phrase "based on" means both of "based only on" and "based at least on".

Every reference to elements that use names such as "first" and "second" used in this description does not generally limit the quantity or the order of these elements. These names can be used in this description as a convenient method for distinguishing between two or more elements. Hence, the reference to the first and second elements does not mean that only two elements can be employed or the first element should precede the second element in some way.

The term "deciding (determining)" used in this description includes diverse operations in some cases. For example, "deciding (determining)" may be regarded to "decide (determine)" calculating, computing, processing, deriving, investigating, looking up (e.g., looking up in a table, a database or another data structure) and ascertaining. Furthermore, "deciding (determining)" may be regarded to "decide (determine)" receiving (e.g., receiving information), transmitting (e.g., transmitting information), input, output and accessing (e.g., accessing data in a memory). Furthermore, "deciding (determining)" may be regarded to "decide (determine)" resolving, selecting, choosing, establishing and comparing. That is, "deciding (determining)" may be regarded to "decide (determine)" some operation.

The words "connected" and "coupled" used in this description or every modification of these words can mean every direct or indirect connection or coupling between 2 or more elements, and can include that 1 or more intermediate elements exist between the two elements "connected" or "coupled" with each other. The elements may be coupled or connected physically, logically or by a combination of the physical and logical connections. For example, "connection" may be read as "access".

It can be understood that, when connected in this description, the two elements are "connected" or "coupled" with each other by using 1 or more electric wires, cables and/or printed electrical connection, and by using electromagnetic energy having wavelengths in radio frequency domains, microwave domains and/or (both of visible and invisible) light domains in some non-restrictive and non-comprehensive examples.

A sentence that "A and B are different" in this description may mean that "A and B are different from each other". Words such as "separate" and "coupled" may be also interpreted in a similar manner.

When the words "including" and "comprising" and modifications of these words are used in this description or the claims, these words intend to be comprehensive similar to the word "having". Furthermore, the word "or" used in this description or the claims intends not to be an XOR.

The present invention has been described in detail above. However, it is obvious for a person skilled in the art that the present invention is not limited to the embodiments described in this description. The present invention can be carried out as modified and changed aspects without departing from the gist and the scope of the present invention defined based on the recitation of the claims. Accordingly, the disclosure of this description is intended for exemplary explanation, and does not bring any restrictive meaning to the present invention.

## Claims

1. A user terminal comprising:
a receiving section that receives information related to whether or not it is possible to perform control of Radio Link Monitoring (RLM) based on a Beam Recovery (BR) result; and
a control section that determines whether or not to perform the control of the RLM based on the BR result, based on the information related to whether or not it is possible to perform the control of the RLM.

2. A user terminal comprising:
the receiving section receives configuration information regarding how to use the BR result to control the RLM, and
the control section performs the control of the RLM based on the BR result, based on the configuration information.

3. The user terminal according to claim 2, wherein the control section regards an indication based on the BR result as one or more indications of in-sync and/or out-of-sync states during the RLM.

4. The user terminal according to claim 2 or 3, wherein the control section changes a counter of a timer during the RLM according to an indication based on the BR result.

5. The user terminal according to any one of claims 2 to 4, wherein the control section changes a number of times of an indication of in-sync and/or out-of-sync states that is necessary to control a timer during the RLM, according to an indication based on the BR result.

6. A radio communication method of a user terminal comprising:
receiving information related to whether or not it is possible to perform control of Radio Link Monitoring (RLM) based on a Beam Recovery (BR) result; and
determining whether or not to perform the control of the RLM based on the BR result, based on the information related to whether or not it is possible to perform the control of the RLM.
